# EUROPEAN PATENT SPECIFICATION

(11) **EP 1 931 165 B1**
(45) Date of publication and mention of the grant of the patent: **01.09.2010**
(21) Application number: 07023761.5
(22) Date of filing: 07.12.2007
(51) Int. Cl.: H04W 4/02

(54) **Method of providing location services in WiMAX network**
Verfahren zur Bereitstellung von Ortsdiensten in einem WiMAX-Netzwerk
Procédé pour fournir des services de localisation dans un réseau WiMAX

(30) Priority: 08.12.2006 KR 20060124954; 06.11.2007 KR 20070112482
(43) Date of publication of application: 11.06.2008
(73) Proprietor: LG - Nortel Co., Ltd., 679, Yeoksam-dong Gangnam-gu Seoul (KR)
(72) Inventor: Bae, Chul Min, Gwanak-gu, Seoul 151-761 (KR)
(74) Representative: Katérle, Axel

(56) References cited:
- EP-A- 1 538 860
- EP-A- 1 860 455
- US-A1- 2005 070 306
- US-B1- 6 356 763
- J. CHOU ET AL: "Location Based Services" IEEE C802.16G-06/036R5, [Online] 25 September 2006 (2006-09-25), pages 1-17, XP002479078 Retrieved from the Internet: URL:http://grouper.ieee.org/groups/802/16/ netman/contrib/C80216g-06_036r5.pdf> [retrieved on 2008-05-05]
- ALCATEL: "Alcatel end-to-end Location-based services solution"[Online] September 2005 (2005-09), pages 1-11, XP002479079 Retrieved from the Internet: URL:http://www.fixedmobileconvergence.net/ whitepapers/fmc-alcatel2.pdf> [retrieved on 2008-05-05]

## Description

### BACKGROUND OF THE INVENTION

The proposed Specification titled Locations Based Services, by Joey Chou and Jose Puthenkulam, discloses one or more proposed mechanism for supporting location based services.

European Patent Application 03425777.4 discloses a system and method for positioning user equipment within a wireless network.

United States Patent 6,356,763 discloses locating the position of a mobile communications unit in a wireless network.

### Field of the Invention

The present invention relates to a method of providing location services in a mobile communication network, and more particularly to a method of providing location services by using messages defined in the Institute of Electrical and Electronic Engineers (IEEE) 802.16 standard in a worldwide interoperability for microwave access (WiMAX) network.

### Background of the Invention

The 802.16 WiMAX technology is a next-generation wireless broadband communication technology providing wide-area outdoor services with more extended functions and coverage than Wi-Fi, which is a wireless communication technology providing indoor services around a hot spot. While the coverage of Wi-Fi (802.11b/g) is about 30 to 200 m and the transmission rate thereof is no more than 4 to 11 Mbps, the coverage of WiMAX can be extended up to 10 km and the available transmission rate thereof is 40 Mbps. This offers a substantial technical advantage.

With the development of mobile communication systems and the increase in subscribers, locations services have been provided to inform the geographical location of a mobile communication terminal. The location services are useful when there is a need for emergency calls, tracking illegal users or logistics management.

There has been no method, which provides location services in a WiMAX network proposed as a next-generation wireless broadband communication technology. Consequently, there is a need for an efficient method of providing location services.

### SUMMARY OF THE INVENTION

Thus, the present invention provides a method of providing location services by using messages defined in the WiMAX wireless standard (IEEE 802.16 standard) without any change in the messages.

The method of the present invention as defined by independent claim 1 provides a method for providing location services of a mobile station in worldwide interoperabllity for microwave access (WiMAX) network comprising: at a serving base station of the a target mobile station, receiving a location service request of the target mobile station from a location service server; at the serving base station, transmitting a scanning interval allocation response message (MOB-SCN-RSP) defined in a WiMAX wireless standard to the target mobile station in response to the location service request; at the serving base station, receiving a scanning result report message (MOB-SCN-REP) defined in the WiMAX Wireless standard and transmitted by the target mobile station in response to the scanning interval allocation response message (MOB-SCN-RSP); and at the serving base station, transmitting a location service response to the location service server upon receiving the scanning result report message (MOB-SCN-REP).

Additionally, as set forth in dependent claim 4, the method may further comprise: at the location service server, receiving a location service request of the target mobile station from a location service client; and at the location service server, generating location information of the target mobile station based on the location service response and providing the location service client with the location information as a location service.

According to yet another embodiment of the present invention, there is provided a storage medium that stores computer-readable instructions for executing each of the methods described above.

### BRIEF DESCRIPTION OF THE DRAWINGS

FIG. 1 is a schematic diagram showing the structure of a portable internet network, to which a portable internet-based wireless positioning in accordance with the present invention is applied;
FIG. 2 shows a call flow for providing location services in accordance with one embodiment of the present invention; and
FIG. 3 shows a call flow for providing location services in accordance with another embodiment of the present invention.

### DETAILED DESCRIPTION OF THE INVENTION

Hereinafter, a method of providing location services in a WiMAX network in accordance with embodiments of the present invention will be described in detail with reference to the accompanying drawings.

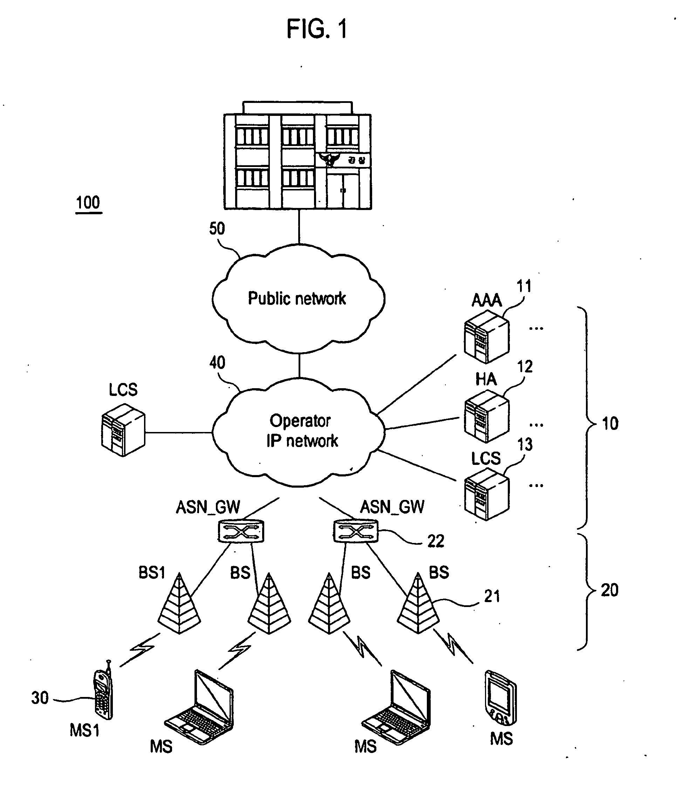

FIG. 1 shows a schematic structure of a WiMAX network 100, to which a location service method in accordance with embodiments of the present invention is applied.

A connectivity service network (CSN) 10 is a set of networks for providing a subscriber of a broadband wireless access system provided by an operator with the connectivity of application services, such as Internet and voice over Internet protocol (VoIP), the home agent (HA) of a mobile IP, authentication and charging functions, and location services. CSN 10 includes an AAA server (authentication, authorization and accounting server) 11, a HA server 12, a location service (LCS) server 13, etc. Especially, the LCS server 13 serves as a positioning server (PS), which processes a location service request from an LCS client and calculates the position of a mobile station (MS).

An access service network (ASN) 20 is a set of networks for providing a subscriber with broadband wireless access. ASN 20 includes a plurality of base stations (BSs) 21 and ASN gateways (ASN_GWs) 22, and supports the functions such as connection setup between BSs 21 and MSs 30, network discovery, network selection, radio resource management, etc. Each of BSs 21 performs the basic functions of BSs, including connecting MSs 30 and ASN_GWs 22 and converting a signal format to adapt the signal to wireless and wired links. Each of BSs 21 includes an LCS module. ASN_GWs 22 perform the functions of session mobility management and ASN radio resource management.

BSs 21 and ASN_GWs 22 may be configured in one unit or in two independent units, and may be seen as one unit logically.

In this embodiment, an operator IP network 40 is a private operator network that provides a mobile communication service. The operator IP network 40 can be connected to a public network 50, which is managed and operated by a national telecommunications infrastructure provider. Alternatively, the operator IP network 40 may be a public network.

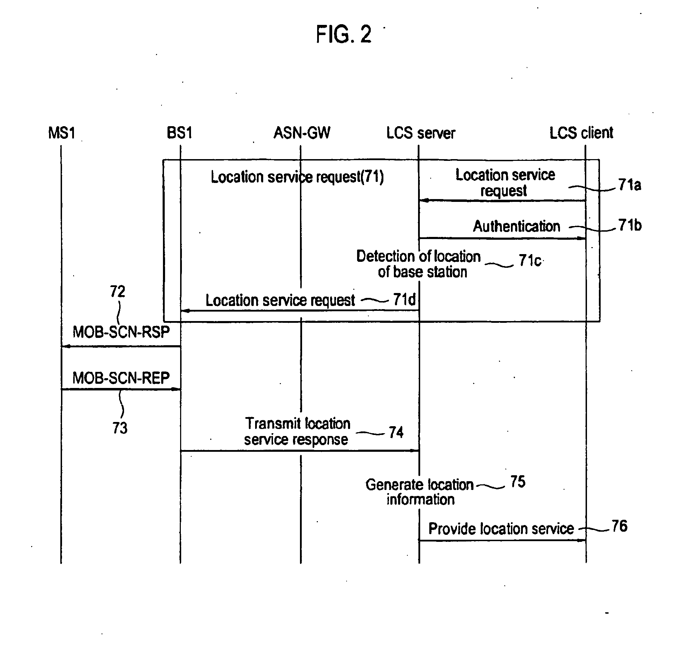

FIG. 2 shows a call flow for providing location services.

Hereinafter, one embodiment of the present invention will be described in detail with reference to FIGs. 1 and 2.

In this embodiment, an LCS client requesting for a location service may be any one of MSs 30 of subscribers, MS of a subscriber of another operator's network (not shown) to be connected to the operator IP network 40, or a wired/wireless terminal receiving communication services via the public network 50, e.g., a wired/wireless terminal of a police station.

The LCS client makes a request 71 for the location service of a target MS1, which receives wireless services from BS1 within ASN. The request 71 for the location service from the LCS client contains the identifier of the target MS1, e.g., a terminal address or telephone number information. At this time, BS1 serves as a serving BS of the target MS1.

The location service request 71 includes a location service request 71a to the LCS sever 13 from the LCS client, LCS client authentication 71b in the LCS server 13, detection 71c of the location of the BS1 in the LCS server 13, and transmission of a location service request 71d to the BS1 from the LCS server 13.

When the location service request 71 is received, the LCS module of BS1 transmits a scanning interval allocation response (MOB-SCN-RSP) message 72 defined in the WiMAX wireless standard (IEEE 802.16 standard). The MOB-SCN-RSP message 72 contains a time interval allocation message for scanning peripheral BSs of the target MS1. The peripheral BSs are BSs except for the serving BS1 among BSs, the downlink transmission of which can be demodulated by the target MS1.

When the MOB-SCN-RSP message 72 is received, the target MS1 scans the peripheral BSs during an allocated scanning interval and transmits a scanning result report (MOB-SCAN-REP) message 73 defined in the above-mentioned standard. The scanning result includes at least one of carrier to interference and noise ratio (CINR), receive signal strength indicator (RSSI), relative delay, and round trip delay (RTD) of each BS.

When the MOB-SCAN-REP message 73 is received, the LCS module of BS1 transmits a location service response 74 containing the scanning result. Upon receiving the location service response 74, the LCS server 13 extracts the scanning result from the location service response 74 received from BS1. The LCS server then generates location information 75 of the target MS1 by using the location information of BS1 and the scanning result. The location of MS1 is expressed in terms of latitude, longitude and altitude. The LCS server 13 provides the LCS client with the generated location information as a location service 76.

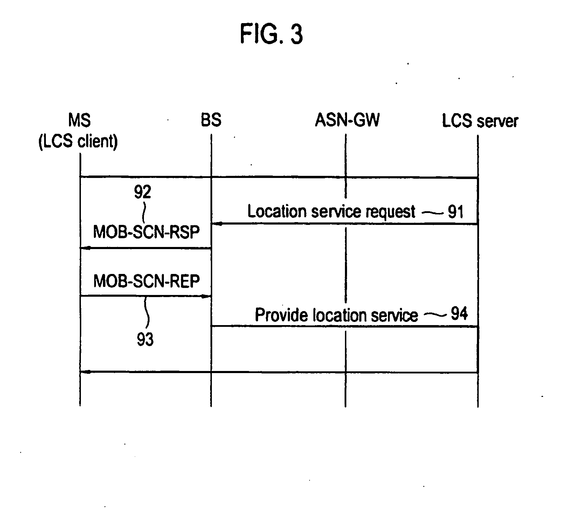

FIG. 3 shows a call flow, which describes a method of providing location services in accordance with another embodiment of the present invention. In this embodiment, MS serves as an LCS client.

According to this embodiment, MS serves as an LCS client and makes a request 91 for its own location service to a serving BS. When a MS location service request 91 of the LCS client is received, an LCS module of the serving BS transmits a scanning interval allocation response (MOB-SCN-RSP) message 92 to MS. Then, MS transmits a scanning result report (MOB-SCN-REP) message 93 in response to the MOB-SCN-RSP message 92. Based on the MOB-SCN-REP message 93, the serving BS generates location information of MS and provides a location service 94.

As can be seen from the above-described embodiments, the present invention can provide location services by employing handover execution messages defined in the WiMAX wireless standard (IEEE 802.16 standard), i.e., the MOB-SCN-RSP message and the MOB-SCN-REP message, without any change.

In another embodiment of the present invention, a storage medium can be employed to store computer-readable instructions for executing each of the above-described embodiments.

According to the embodiments of the present invention, it is possible to provide a WiMAX location service without changing the configuration of mobile stations used in a WiMAX network by using messages defined in the existing WiMAX wireless standard (IEEE 802.16 standard) without any change.

## Claims

1. A method of providing location services of a mobile station in worldwide interoperability for microwave access (WiMAX) network including base stations, **characterized by**:
at a serving base station of a target mobile station, receiving a location service request (71, 91) of the target mobile station from a location service server;
at the serving base station, transmitting a scanning interval allocation response message (MOB-SCN-RSP) (72, 92) defined in a WiMAX wireless standard to the target mobile station in response to the location service request;
at the serving base station, receiving a scanning result report message (MOB-SCN-REP) (73, 93) defined in the WiMAX wireless standard and transmitter by the target mobile station in response to the scanning interval allocation response message (MOB-SCN-RSP); and
at the serving base station, transmitting a location service response (74, 94) to the location service server upon receiving the scanning result report message (MOB-SCN-REP).¹

2. The method of Claim 1, wherein the location service response contains the scanning result with at least one of carrier to interference and noise ratio (CINR), receive signal strength indicator (RSSI), relative delay and round trip delay (RTD) of each base station.

3. The method of Claim 1, wherein the WiMAX wireless standard is an IEEE 802.16 standard.

4. The method of claim 1, wherein the WiMAX network includes the location service server, the method further comprising:
at the location service server, receiving a location service request of the target mobile station from a location service client;
at the location service server, making the location service request to the serving base station of the target mobile station;
at the location service server, generating location information (75) of the target mobile station based on the location service response and providing the location service client with the location information as a location service (76).

5. The method of Claim 4, further comprising, authenticating the location service client at the location service server.

6. The method of Claim 4, further comprising, detecting the location of the serving base station at the location service server.

7. The method of Claim 4, wherein the location service response contains the scanning result with at least one of carrier to interference and noise ratio (CINR), receive signal strength indicator (RSSI), relative delay and round trip delay (RTD) of each base station.

8. The method of Claim 4, wherein the WiMAX wireless standard is an IEEE 802.16 standard.

9. A storage medium that stores computer-readable instructions for executing a method of providing location services of a mobile station in a WiMAX network including base stations, the method **characterized by**:
at a serving base station of a target mobile station, receiving a location service request (71, 91) of the target mobile station from as location service server;
at the serving base station, transmitting a scanning interval allocation response message (MOB-SCN-RSP) (72, 92) defined in a WiMAX wireless standard to the target mobile station in response to the location service request;
at the serving base station, receiving a scanning result report message (MOB-SCN-REP) (73, 93) defined in the WiMAX wireless standard and transmitted by the target mobile station in response to the scanning interval allocation response message (MOB-SCN-RSP); and
at the serving base station, transmitting a location service response (74, 94) to the location service server upon receiving the scanning result report message (MOB-SCN-REP).²

10. The storage medium of Claim 9, wherein the location service response contains the scanning result with at least one of carrier to interference and noise ratio (CINR), receive signal strength indicator (RSSI), relative delay and round trip delay (RTD) of each base station.

11. The storage medium of Claim 9, wherein the WiMAX wireless standard is an IEEE 802.16 standard.

12. The storage medium of Claim 9, the WiMAX network including the location service server, and the method further comprising:
at the location service server, receiving a location service request of a target mobile station from a location service client;
at the location service server, making the location service request to the serving base station of the target mobile station;
at the location service server, generating location information (75) of the target mobile station based on the location service response to provide the location service client with the location information as a location service (76).

13. The storage medium of Claim 12, wherein the method further comprises, authenticating the location service client at the location service server.

14. The storage medium of Claim 12, wherein the method further comprises, detecting the location of the serving base station at the location service server.

15. The storage medium of Claim 12, wherein the location service response contains the scanning result with at least one of carrier to interference and noise ratio (CINR), receive signal strength indicator (RSSI), relative delay and round trip delay (RTD) of each base station.

16. The storage medium of Claim 12, wherein the WiMAX wireless standard is an IEEE 802.16 standard.

## Patentansprüche

1. Verfahren zum Bereitstellen von ortsbasierten Diensten einer Mobilstation in einem Basisstationen umfassenden Netzwerk mit weltweiter Interoperabilität für Mikrowellenzugriff (WiMAX), **gekennzeichnet durch**:
- Empfangen, an einer diensterbringenden Basisstation einer Ziel-Mobilstation, einer Ortsdienstanforderung (71, 91) der Ziel-Mobilstation von einem Ortsdienstserver,
- Senden, an der diensterbringenden Basisstation, einer in einem WiMAX-Drahtlosstandarddefinierten Antwortnachricht für eine Abtastintervallzuteilung (MOB-SCN-RSP) (72, 92) an die Ziel-Mobilstation in Antwort auf die Ortsdienstanforderung,
- Empfangen, an der diensterbringenden Basisstation, einer in dem WiMAX-Drahtlosstandarddefinierten Berichtnachricht über ein Abtastergebnis (MOB-SCN-REP) (73, 93), welche von der Ziel-Mobilstation in Antwort auf die Antwortnachricht für die Abtastintervallzuteilung (MOB-SCN-RSP) gesendet wurde, und
- Senden, an der diensterbringenden Basisstation, einer Ortsdienstantwort (74, 94) an den Ortsdienstserver auf den Empfang der Berichtnachricht über das Abtastergebnis (MOB-SCN-REP).

2. Verfahren nach Anspruch 1, wobei die Ortsdienstantwort das Abtastergebnis mit mindestens einem der Folgenden enthält: Verhältnis Träger zu Interferenz und Rauschen (CINR), einen Indikator für die Empfangssignalstärke (RSSI), relative Verzögerung und Umlaufverzögerung (RTD) jeder Basisstation.

3. Verfahren nach Anspruch 1, wobei der WiMAX-Drahtlosstandard ein IEEE 802.16 Standard ist.

4. Verfahren nach Anspruch 1, wobei das WiMAX-Netzwerk den Ortsdienstserver umfasst, wobei das Verfahren ferner umfasst:
- Empfangen, an dem Ortsdienstserver, einer Ortsdienstanforderung der Ziel-Mobilstation von einem Ortsdienstclient,
- Richten, an dem Ortsdienstserver, der Ortsdienstanforderung an die diensterbringende Basisstation der Ziel-Mobilstation,
- Erzeugen, an dem Ortsdienstserver, einer Ortsinformation (75) der Ziel-Mobilstation abhängig von der Ortsdienstantwort und Beliefern des Ortsdienstclient mit der Ortsinformation als ortsbasierter Dienst (76).

5. Verfahren nach Anspruch 4, ferner umfassend eine Authentifikation des Ortsdienstclient bei dem Ortsdienstserver.

6. Verfahren nach Anspruch 4, ferner umfassend ein Erfassen des Orts der diensterbringenden Basisstation bei dem Ortsdienstserver.

7. Verfahren nach Anspruch 4, wobei die Ortsdienstantwort das Abtastergebnis mit mindestens einem der Folgenden enthält: Verhältnis Träger zu Interferenz und Rauschen (CINR), einen Indikator für die Empfangssignalstärke (RSSI), relative Verzögerung und Umlaufverzögerung (RTD) jeder Basisstation.

8. Verfahren nach Anspruch 4, wobei der WiMAX-Drahtlosstandard ein IEEE 802.16 Standard ist.

9. Speichermedium, welches computerlesbare Instruktionen zur Ausführung eines Verfahrens zur Bereitstellung ortsbasierter Dienste einer Mobilstation in einem Basisstationen umfassenden WiMAX-Netzwerk speichert, wobei das Verfahren **gekennzeichnet ist durch**:
- Empfangen, an einer diensterbringenden Basisstation einer Ziel-Mobilstation, einer Ortsdienstanforderung (71, 91) der Ziel-Mobilstation von einem Ortsdienstserver,
- Senden, an der diensterbringenden Basisstation, einer in einem WiMAX-Drahtlosstandarddefinierten Antwortnachricht für eine Abtastintervallzuteilung (MOB-SCN-RSP) (72, 92) an die Ziel-Mobilstation in Antwort auf die Ortsdienstanforderung,
- Empfangen, an der diensterbringenden Basisstation, einer in dem WiMAX-Drahtlosstandarddefinierten Berichtnachricht über ein Abtastergebnis (MOB-SCN-REP) (73, 93), welche von der Ziel-Mobilstation in Antwort auf die Antwortnachricht für die Abtastintervallzuteilung (MOB-SCN-RSP) gesendet wurde, und
- Senden, an der diensterbringenden Basisstation, einer Ortsdienstantwort (74, 94) an den Ortsdienstserver auf den Empfang der Berichtnachricht über das Abtastergebnis (MOB-SCN-REP).

10. Speichermedium nach Anspruch 9, wobei die Ortsdienstantwort das Abtastergebnis mit mindestens einem der Folgenden enthält: Verhältnis Träger zu Interferenz und Rauschen (CINR), einen Indikator für die Empfangssignalstärke (RSSI), relative Verzögerung und Umlaufverzögerung (RTD) jeder Basisstation.

11. Speichermedium nach Anspruch 9, wobei der WiMAX-Drahtlosstandard ein IEEE 802.16 Standard ist.

12. Speichermedium nach Anspruch 9, wobei das WiMAX-Netzwerk den Ortsdienstserver umfasst, wobei das Verfahren ferner umfasst:
- Empfangen, an dem Ortsdienstserver, einer Ortsdienstanforderung der Ziel-Mobilstation von einem Ortsdienstclient,
- Richten, an dem Ortsdienstserver, der Ortsdienstanforderung an die diensterbringende Basisstation der Ziel-Mobilstation,
- Erzeugen, an dem Ortsdienstserver, einer Ortsinformation (75) der Ziel-Mobilstation abhängig von der Ortsdienstantwort und Beliefern des Ortsdienstclient mit der Ortsinformation als ortsbasierter Dienst (76).

13. Speichermedium nach Anspruch 12, wobei das Verfahren ferner eine Authentifikation des Ortsdienstclient bei dem Ortsdienstserver umfasst.

14. Speichermedium nach Anspruch 12, wobei das Verfahren ferner ein Erfassen des Orts der diensterbringenden Basisstation bei dem Ortsdienstserver umfasst.

15. Speichermedium nach Anspruch 12, wobei die Ortsdienstantwort das Abtastergebnis mit mindestens einem der Folgenden enthält: Verhältnis Träger zu Interferenz und Rauschen (CINR), einen Indikator für die Empfangssignalstärke (RSSI), relative Verzögerung und Umlaufverzögerung (RTD) jeder Basisstation.

16. Speichermedium nach Anspruch 12, wobei der WiMAX-Drahtlosstandard ein IEEE 802.16 Standard ist.

## Revendications

1. Procédé de fourniture de services de localisation d'une station mobile dans un réseau à interopérabilité mondiale des accès d'hyperfréquence (WiMAX) incluant des stations de base, **caractérisé par** :
au niveau d'une station de base de desserte d'une station mobile cible, la réception d'une demande de service de localisation (71, 91) de la station mobile cible provenant d'un serveur de services de localisation ;
au niveau de la station de base de desserte, la transmission d'un message de réponse d'attribution d'intervalle de balayage (MOB-SCN-RSP) (72, 92) défini à une norme sans fil WiMAX à la station mobile cible en réponse à la demande de service de localisation ;
au niveau de la station de base de desserte, la réception d'un message de rapport de résultat de balayage (MOB-SCN-REP) (73, 93) défini à la norme sans fil WiMAX et
transmis par la station mobile cible en réponse au message de réponse d'attribution d'intervalle de balayage (MOB-SCN-RSP) ; et
au niveau de la station de base de desserte, la transmission d'une réponse de service de localisation (74, 94) au serveur de services de localisation à réception du message de réponse d'attribution d'intervalle de balayage (MOB-SCN-RSP).¹

2. Procédé selon la revendication 1, dans lequel la réponse de service de localisation contient le résultat de balayage avec au moins l'un d'un rapport porteuse sur interface plus bruit (CINR), d'un indicateur de puissance de signal de réception (RSSI), d'un temps de propagation relative et d'un temps de propagation aller et retour (RTD) de chaque station de base.

3. Procédé selon la revendication 1, dans lequel la norme sans fil WiMAX est une norme IEEE 802.16.

4. Procédé selon la revendication 1, dans lequel le réseau WiMAX inclut le serveur de services de localisation, le procédé comprenant en outre :
au niveau du serveur de services de localisation, la réception d'une demande de service de localisation de la station mobile cible provenant d'un client de services de localisation ;
au niveau du serveur de services de localisation, l'exécution de la demande de service de localisation à la station de base de desserte de la station mobile cible ;
au niveau du serveur de services de localisation, la génération d'une information de localisation (75) de la station mobile cible sur la base de la réponse de service de localisation et la fourniture au client de services de localisation de l'information de localisation comme un service de localisation (76).

5. Procédé selon la revendication 4, comprenant en outre l'authentification du client de services de localisation au niveau du serveur de services de localisation.

6. Procédé selon la revendication 4, comprenant en outre la détection de la localisation de la station de base de desserte au niveau du serveur de services de localisation.

7. Procédé selon la revendication 4, dans lequel la réponse de service de localisation contient le résultat de balayage avec au moins l'un d'un rapport porteuse sur interface plus bruit (CINR), d'un indicateur de puissance de signal de réception (RSSI), d'un temps de propagation relative et d'un temps de propagation aller et retour (RTD) de chaque station de base.

8. Procédé selon la revendication 4, dans lequel la norme sans fil WiMAX est une norme IEEE 802.16.

9. Support de stockage qui stocke des instructions lisibles par ordinateur pour l'exécution d'un procédé de fourniture de services de localisation d'une station mobile dans un réseau WiMAX incluant des stations de base, le procédé **caractérisé par** :
au niveau d'une station de base de desserte d'une station mobile cible, la réception d'une demande de service de localisation (71, 91) de la station mobile cible provenant d'un serveur de services de localisation ;
au niveau de la station de base de desserte, la transmission d'un message de réponse d'attribution d'intervalle de balayage (MOB-SCN-RSP) (72, 92) défini à une norme sans fil WiMAX à la station mobile cible en réponse à la demande de service de localisation ;
au niveau de la station de base de desserte, la réception d'un message de rapport de résultat de balayage (MOB-SCN-REP) (73, 93) défini à la norme sans fil WiMAX et
transmis par la station mobile cible en réponse au message de réponse d'attribution d'intervalle de balayage (MOB-SCN-RSP) ; et
au niveau de la station de base de desserte, la transmission d'une réponse de service de localisation (74, 94) au serveur de services de localisation à réception du message de réponse d'attribution d'intervalle de balayage (MOB-SCN-RSP).¹

10. Support de stockage selon la revendication 9, dans lequel la réponse de service de localisation contient le résultat de balayage avec au moins l'un d'un rapport porteuse sur interface plus bruit (CINR), d'un indicateur de puissance de signal de réception (RSSI), d'un temps de propagation relative et d'un temps de propagation aller et retour (RTD) de chaque station de base.

11. Support de stockage selon la revendication 9, dans lequel la norme sans fil WiMAX est une norme IEEE 802.16.

12. Support de stockage selon la revendication 9, le réseau WiMAX incluant le serveur de services de localisation, et le procédé comprenant en outre :
au niveau du serveur de services de localisation, la réception d'une demande de service de localisation d'une station mobile cible provenant d'un client de services de localisation ;
au niveau du serveur de services de localisation, l'exécution de la demande de service de localisation à la station de base de desserte de la station mobile cible ;
au niveau du serveur de services de localisation, la génération d'une information de localisation (75) de la station mobile cible sur la base de la réponse de service de localisation pour fournir au client de services de localisation l'information de localisation comme un service de localisation (76).

13. Support de stockage selon la revendication 12, dans lequel le procédé comprend en outre l'authentification du client de services de localisation au niveau du serveur de services de localisation.

14. Support de stockage selon la revendication 12, dans lequel le procédé comprend en outre la détection de la localisation de la station de base de desserte au niveau du serveur de services de localisation.

15. Support de stockage selon la revendication 12, dans lequel la réponse de service de localisation contient le résultat de balayage avec au moins l'un d'un rapport porteuse sur interface plus bruit (CINR), d'un indicateur de puissance de signal de réception (RSSI), d'un temps de propagation relative et d'un temps de propagation aller et retour (RTD) de chaque station de base.

16. Support de stockage selon la revendication 12, dans lequel la norme sans fil WiMAX est une norme IEEE 802.16.
